# FASCICULE DE BREVET EUROPEEN

(11) **EP 3 332 108 B1**
(45) Date de publication et mention de la délivrance du brevet: **29.05.2019**
(21) Numéro de dépôt: 16757319.5
(22) Date de dépôt: 02.08.2016
(51) Int. Cl.: F02K 9/56, F02K 9/96, F02K 9/00

(54) **PROCÉDÉ DE CONTRÔLE DE LA PRESSION ET D'UN RAPPORT DE MÉLANGE D'UN MOTEUR DE FUSÉE, ET DISPOSITIF CORRESPONDANT**
VERFAHREN ZUR STEUERUNG DES DRUCKS UND EINES MISCHUNGSVERHÄLTNISSES EINES RAKETENTRIEBWERKS UND ENTSPRECHENDE VORRICHTUNG
METHOD FOR CONTROLLING THE PRESSURE AND A MIXTURE RATIO OF A ROCKET ENGINE, AND CORRESPONDING DEVICE

(30) Priorité: 06.08.2015 FR 1501683
(43) Date de publication de la demande: 13.06.2018
(73) Titulaire: ARIANEGROUP SAS, 75015 Paris (FR)
(72) Inventeur: LE GONIDEC, Serge, Daniel, 27200 Vernon (FR)
(74) Mandataire: Cabinet Beau de Loménie
(86) Numéro de dépôt international: PCT/FR2016/052011
(87) Numéro de publication internationale: WO 2017/021651

(56) Documents cités:
- EP-A1- 2 187 031
- FR-A1- 2 965 305
- JP-A- H0 886 246
- US-A- 3 851 157

## Description

### Arrière-plan de l'invention

L'invention se rapporte au domaine général des moteurs de fusée. Elle concerne plus précisément le contrôle de ces moteurs, et en particulier le contrôle de la pression et du rapport de mélange de ces moteurs.

Les moteurs de fusée sont notamment contrôlés pour atteindre un point de fonctionnement voulu, par exemple à partir de consignes de pression et de consignes de rapport de mélange. Cette pression correspond à la pression dans la chambre de combustion du moteur, et le rapport de mélange correspond au rapport de débit massique oxygène/hydrogène en entrée de cette chambre de combustion.

Traditionnellement, à partir de ces consignes, on commande des vannes de contrôle, désignées par l'homme du métier comme étant les vannes permettant d'agir sur le moteur, celles-ci pouvant être, par exemple, des vannes dites de bypass. La position des vannes de contrôle est contrôlée pour atteindre les consignes de pression et de rapport de mélange.

Une solution pour contrôler le moteur peut être une solution en boucle ouverte dans laquelle les commandes des vannes de contrôle sont calculées préalablement pour que ces commandes soient délivrées à partir des consignes. Cela étant, ces solutions ne sont pas satisfaisantes car elles présentent un niveau d'incertitude élevé.

Une autre solution est de mettre en oeuvre une régulation en boucle fermée. Le paramètre à réguler (par exemple la pression ou le rapport de mélange) est mesuré et on utilise cette valeur pour corriger la régulation. Ceci permet notamment de compenser les perturbations exogènes (l'accélération), ou encore les perturbations endogènes (par exemple les dégradations).

Le moteur de fusée étant un système multi-variables (deux consignes, et plusieurs signaux de commandes), on peut utiliser plusieurs boucles de régulation. Cela étant, ces boudes requièrent des mesures des paramètres à réguler.

Certaines mesures peuvent ne pas être réalisées. Tel est le cas si les modules de mesure de l'un des deux paramètres est indisponible ou n'est pas prévu dans le système. Cela est fréquemment le cas pour les modules de mesure du rapport de mélange, dont la mesure peut être complexe. Pour mesurer le rapport de mélange, il est nécessaire de mesurer chacun des débits, ou d'estimer chacun de ces débits. Si des estimateurs sont utilisés, il est nécessaire de mesurer d'autres paramètres et ces mesures sont complexes. Il peut par ailleurs être nécessaire d'utiliser des mesures redondantes.

Pour pallier ces inconvénients et bien que toutefois le moteur est régulé sur un premier paramètre, par exemple la pression, il a été proposé de compenser les variations des commandes des vannes de contrôle pour maintenir un rapport de mélange souhaité.

Cette compensation est nécessaire ici puisque le système est dit couplé. En d'autres termes, il y a une interaction entre la pression et le rapport de mélange due à la sensibilité aux deux vannes de contrôle. La compensation est généralement mise en oeuvre en inversant une matrice de sensibilité et elle peut être réalisée à partir de cartographies de valeurs de commandes pour les vannes de contrôle.

Cela étant, l'inversion matricielle n'est pas possible pour les systèmes non-linéaires, et tel est le cas d'un moteur de fusée. La compensation linéaire n'est donc applicable qu'au voisinage d'un point de fonctionnement choisi.

L'invention vise notamment à pallier les inconvénients mentionnés ci-dessus, et en particulier de fournir un contrôle de la poussée et du rapport de mélange sans nécessiter de mesure du rapport de mélange, et de fournir une solution adaptée aux systèmes non-linéaires.

### Objet et résumé de l'invention

La présente invention répond à ce besoin en proposant un procédé de contrôle de la pression et d'un rapport de mélange d'un moteur de fusée à partir d'une consigne de pression et d'une consigne de rapport de mélange, comprenant une régulation délivrant des signaux de commande de deux vannes de contrôle dudit moteur, la régulation utilisant une boucle de rétroaction de la pression.

Selon une caractéristique générale, ce procédé comporte en outre une détermination d'une valeur estimée de rapport de mélange utilisée par ladite régulation, la valeur estimée de rapport de mélange étant obtenue par un modèle délivrant des valeurs de rapport de mélange estimées à partir d'au moins l'un des deux signaux de commande de vannes de contrôle et/ou de la pression mesurée.

Ainsi, il n'est pas nécessaire d'utiliser des capteurs pour mesurer le rapport de mélange, L'invention propose donc une solution simple sans requérir de capteurs supplémentaires.

On peut noter que la pression mesurée est utilisée dans la boucle de rétroaction de la pression, et que cette grandeur est donc régulée : l'erreur sur cette grandeur est donc minimale. De ce fait, l'estimation du rapport de mélange est plus précise.

Aussi, l'utilisation d'un modèle élaboré préalablement permet de prendre en compte le caractère non-linéaire du système.

Les vannes de contrôle dudit moteur peuvent être situées en différentes localisations selon le cycle thermodynamique du moteur, par exemple en parallèle des turbines ou encore en aval de réservoirs d'ergols.

Dans un mode particulier de mise en oeuvre, ledit au moins l'un des deux signaux de commande de vanne de contrôle est un signal de commande ayant une sensibilité de fonctionnement plus élevée sur le rapport de mélange que l'autre signal de commande de vanne de contrôle.

En d'autres termes, on utilise en entrée du modèle un signal de commande qui a une plus grande influence sur les variations de rapport de mélange.

Dans un mode particulier de mise en oeuvre, le modèle comprend un traitement dynamique préalable d'au moins l'un des deux signaux de commande de vannes de contrôle et de la pression mesurée avant leur fourniture au modèle et un traitement dynamique de la valeur de rapport de mélange estimée obtenue par le modèle.

Ainsi, le modèle comporte une partie statique dans laquelle des valeurs établies préalablement de rapport de mélange estimées sont obtenues par une relation liant les entrées et les sorties (par exemple reliant les signaux de commande des vannes de contrôle, la pression, et le rapport de mélange qui est la sortie), mais les valeurs appliquées en entrée de ce modèle sont traitées par exemple par des fonctions de transfert utilisant des zéros et des pôles.

Dans un mode particulier de mise en oeuvre, ledit modèle comporte un réseau neuronal artificiel.

Ce réseau neuronal artificiel correspond à la partie statique du modèle.

Ceci peut avantageusement permettre de mettre en oeuvre un apprentissage préalable de sorte que le modèle fournisse des valeurs de rapport de mélange estimées satisfaisantes.

Dans un mode particulier de mise en oeuvre, on applique un décalage audit au moins l'un des deux signaux de commande de vannes de contrôle et à ladite pression mesurée préalablement à leur fourniture audit modèle.

Un tel décalage peut notamment permettre d'adapter un modèle prévu pour différents moteurs à un moteur particulier, et ce de manière simple.

Dans un mode particulier de mise en oeuvre, le procédé comprend un apprentissage préalable dudit réseau neuronal artificiel, un essai dudit moteur de fusée, et un recalage dudit réseau neuronal artificiel pour en déduire lesdits décalages.

L'invention propose également un dispositif de contrôle de la pression et d'un rapport de mélange d'un moteur de fusée, le dispositif comportant une entrée pour recevoir une consigne de pression, une entrée pour recevoir une consigne de rapport de mélange, un module de régulation de la pression délivrant des signaux de commande de deux vannes de contrôle dudit moteur, le module de régulation utilisant une boucle de rétroaction de la pression.

Selon une caractéristique générale, ce dispositif comporte un module d'estimation de rapport de mélange comportant un modèle délivrant audit module de régulation des valeurs de rapport de mélange estimées à partir d'au moins l'un des deux signaux de commande de vannes de contrôle et/ou de la pression mesurée.

Ce dispositif peut être configuré pour mettre en oeuvre les différents modes de mise en oeuvre du procédé de contrôle tel que défini ci-avant.

On peut noter que le module de régulation peut être mono-variable ou multi-variable.

L'invention propose également un système comportant un moteur de fusée et un dispositif tel que défini ci-avant.

### Brève description des dessins

D'autres caractéristiques et avantages de la présente invention ressortiront de la description faite ci-dessous, en référence aux dessins annexés qui en illustrent un exemple dépourvu de tout caractère limitatif.

Sur les figures :
- la figure 1 représente de façon schématique un moteur et un dispositif de contrôle selon l'invention,
- la figure 2 représente de façon plus précise un dispositif de contrôle selon l'invention,
- la figure 3 est un exemple schématique d'un module d'estimation selon l'invention,
- la figure 4 est un exemple de surface pouvant être utilisé dans un modèle de module d'estimation,
- la figure 5 est une variante d'un dispositif de contrôle selon l'invention, et
- la figure 6 illustre schématiquement certaines étapes préalables d'un procédé selon l'invention.

### Description détaillée d'un mode de réalisation

Nous allons maintenant décrire un procédé et un dispositif de contrôle de la pression et du rapport de mélange au sein d'un moteur de fusée.

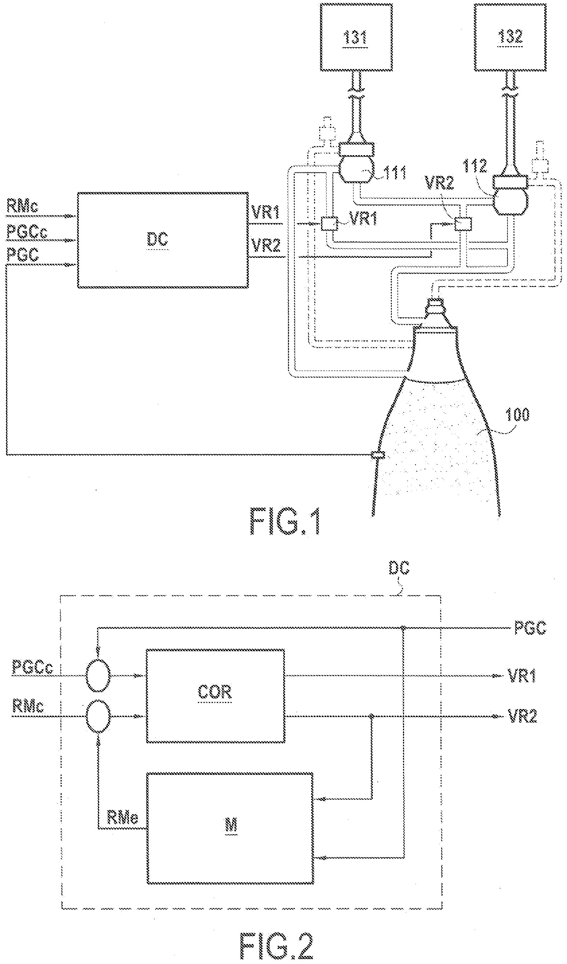

Sur la figure 1, on a représenté un système comportant un dispositif de contrôle DC et un moteur de fusée. Bien que le moteur de fusée de cette figure soit compris dans un système selon l'invention, sa structure interne ne concerne pas à proprement parler l'invention.

A titre indicatif, la structure du moteur de la figure 1 correspond à la structure décrite plus en détail dans le document EP 2 187 031.

Le moteur comporte ici deux réservoirs d'ergols 131 et 132. En aval de chaque réservoir 131 et 132, le moteur comporte une pompe 111 ou 112.

En aval de ces pompes, le moteur comporte sur les deux lignes turbines deux vannes de contrôle dites de bypass VR1 et VR2. On peut noter que dans la présente description, les références VR1 et VR2 sont utilisées à la fois pour désigner les vannes de contrôle et leurs signaux de commande, qui déterminent leur position.

Le moteur comporte en outre une chambre de combustion, et c'est dans cette chambre de combustion que l'on souhaite réguler la pression (référencée PGC ci-après) et le rapport de mélange.

On peut noter que dans la configuration illustrée, l'homme du métier sait que la vanne de contrôle VR2 est la vanne qui a la plus grande sensibilité fonctionnelle sur le rapport de mélange.

Le dispositif de contrôle DC de la pression et du rapport de mélange est équipé d'une entrée pour recevoir une consigne de pression notée PGCc et d'une entrée pour recevoir une consigne de rapport de mélange RMc. Pour assurer la régulation de la pression en boucle fermée, une mesure de la pression réelle PGC dans la chambre de combustion est effectuée par un capteur relié à une autre entrée du dispositif de contrôle DC.

Le dispositif de contrôle DC délivre des signaux de commande aux deux vannes de contrôle VR1 et VR2.

Sur la figure 2, on a représenté de manière plus détaillée le dispositif de contrôle DC décrit en se référant à la figure 1.

Le dispositif DC comporte, comme indiqué ci-avant, des entrées pour la consigne de pression PGCc, la consigne de rapport de mélange RMc, la pression mesurée PGC, et le dispositif délivre en sortie les signaux de commande VR1 et VR2 (ces signaux étant destinés à minimiser les erreurs appliquées en entrée du correcteur).

Pour délivrer les signaux de commande, le dispositif DC comporte un correcteur COR ainsi qu'un module d'estimation M. Le module M délivre des valeurs estimées de rapport de mélange notées RMe à partir de la pression PGC et de la commande VR2 et d'un modèle liant ces paramètres.

Le correcteur traite les erreurs entre d'une part la pression PGC et la consigne de pression PGCc (grâce à la boucle de rétroaction), et d'autre part le rapport de mélange estimé RMe et la consigne de rapport de mélange RMc. Le correcteur peut ainsi délivrer des signaux de commande VR1 et VR2.

La structure du correcteur COR est analogue à celle s'un correcteur de l'art antérieur dans lequel une mesure du rapport de mélange est possible.

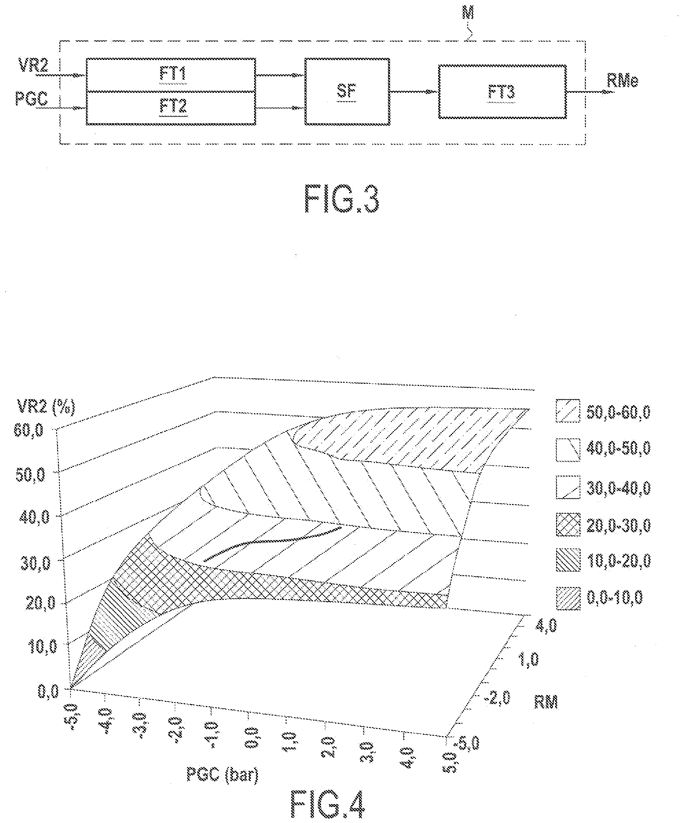

Sur la figure 3, on a représenté un exemple de réalisation d'un module d'estimation M qui comporte modèle SF, par exemple une surface définie par des valeurs de pression, des valeurs de signal de commande VR2, et des valeurs de rapport de mélange estimées.

Le modèle SF peut comporter un réseau neuronal artificiel.

Sur cette figure, on a également représenté la partie dynamique du module d'estimation M. Le module d'estimation M comporte des modules de traitement préalable de chaque entrée du module M, c'est-à-dire un module de traitement dynamique FT1 traitant la commande VR2, et un module de traitement FT2 traitant la pression PGC. Le modèle SF délivre des valeurs qui sont traitées par un module de traitement dynamique FT3 pour ensuite délivrer la valeur de rapport de mélange estimé RMe.

Les modules de traitement dynamiques FT1, FT2 et FT3 peuvent présenter des fonctions de transfert ayant des zéros et des pôles et l'homme du métier saura choisir la forme de ces fonctions en fonction de l'application.

Sur la figure 4 on a représenté un exemple de surface SF définie par des valeurs de pression PGC, des valeurs de signal de commande VR2, et des valeurs de rapport de mélange estimées RMe. Une telle surface peut être modélisée par un réseau neuronal artificiel.

Sur cette figure, on a représenté par un trait fort un exemple de chemin parcouru lors de la mise en oeuvre du procédé de contrôle selon l'invention.

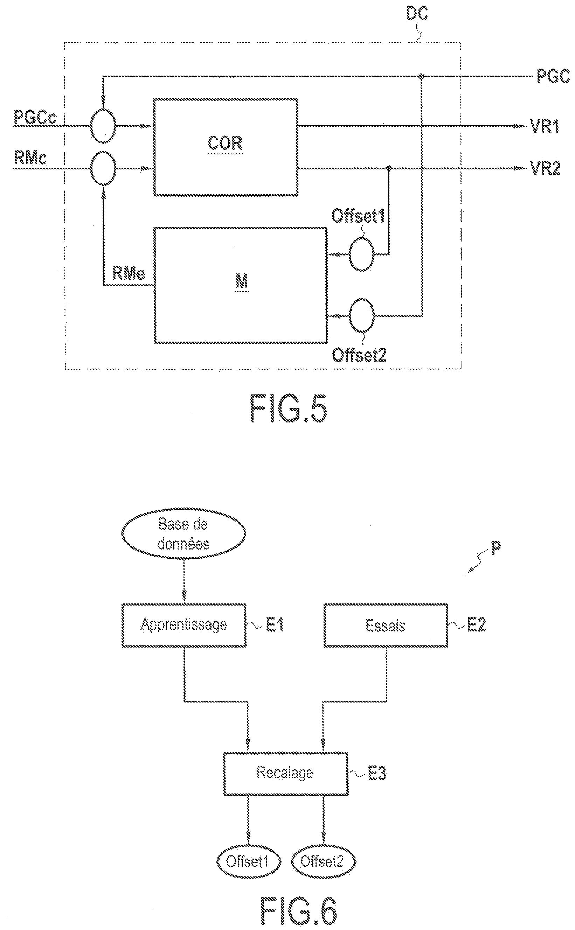

Sur la figure 5, on a représenté une variante d'un dispositif de contrôle DC. Les éléments portant les mêmes références que ceux représentés sur la figure 2 sont identiques.

Sur cette figure, on a représenté l'application d'un décalage offset1 sur le signal de commande de vanne VR2 avant que ce signal ne soit fourni au module d'estimation M.

De manière analogue, on a représenté l'application d'un décalage offset2 sur la pression PGC avant que cette pression ne soit fournie au module M.

Sur la figure 6, on a représenté un ensemble d'étapes P mises en oeuvre avant le contrôle d'un moteur de fusée, dans un mode de mise en oeuvre et de réalisation dans lequel le modèle comporte un réseau neuronal artificiel.

Préalablement à ce contrôle, on met en oeuvre un apprentissage d'un réseau neuronal artificiel (étape E1). Cela peut être fait à partir d'une base de données comportant des données de test de moteurs de fusée.

Le réseau neuronal artificiel obtenu après l'étape E1 pourrait être utilisé pour contrôler un moteur de fusée. Cela étant pour prendre en compte les caractéristiques propres d'un moteur, on peut mettre en oeuvre des essais de ce moteur (étape E2) pour observer comment la pression, le signal de commande VR2, et le rapport de mélange y sont liés.

On peut ainsi recaler (étape E3) le réseau neuronal artificiel (ou la surface correspondante) et déterminer par exemple les décalages offset1 et offset2 décrits en référence à la figure 5.

## Revendications

1. Procédé de contrôle de la pression (PGC) et d'un rapport de mélange d'un moteur de fusée à partir d'une consigne de pression (PGCc) et d'une consigne de rapport de mélange (RMc), comprenant une régulation délivrant des signaux de commande de deux vannes de contrôle (VR1, VR2) dudit moteur, la régulation utilisant une boucle de rétroaction de la pression,
**caractérisé en ce qu'**il comporte en outre une détermination d'une valeur estimée de rapport de mélange (RMe) utilisée par ladite régulation, la valeur estimée de rapport de mélange étant obtenue par un modèle (M) délivrant des valeurs de rapport de mélange estimées à partir d'au moins l'un des deux signaux de commande de vannes de contrôle et/ou de la pression mesurée.

2. Procédé selon la revendication 1, dans lequel ledit au moins l'un des deux signaux de commande de vanne de contrôle est un signal de commande (VR2) ayant une sensibilité de fonctionnement plus élevée sur le rapport de mélange que l'autre signal de commande de vanne.

3. Procédé selon l'une quelconque des revendications 1 à 2, comprenant un traitement dynamique (FT1, FT2) préalable d'au moins l'un des deux signaux de commande de vannes de contrôle et de la pression mesurée avant leur fourniture au modèle et un traitement dynamique (FT3) de la valeur de rapport de mélange estimée obtenue par le modèle.

4. Procédé selon l'une des revendications 1 à 3, dans lequel ledit modèle (M) comporte un réseau neuronal artificiel

5. Procédé selon l'une des revendications 1 à 4, dans lequel on applique un décalage (offset1, offset 2) audit au moins l'un des deux signaux de commande de vannes de contrôle et à ladite pression mesurée (PGC) préalablement à leur fourniture audit modèle.

6. Procédé selon les revendications 4 et 5, comprenant un apprentissage (E1) préalable dudit réseau neuronal artificiel, un essai (E2) dudit moteur de fusée, et un recalage (E3) dudit réseau neuronal artificiel pour en déduire lesdits décalages,

7. Dispositif de contrôle de la pression et d'un rapport de mélange d'un moteur de fusée, le dispositif comportant une entrée pour recevoir une consigne de pression (PGCc), une entrée pour recevoir une consigne de rapport de mélange (RMc), un module de régulation de la pression délivrant des signaux de commande de deux vannes de contrôle dudit moteur, le module de régulation utilisant une boucle de rétroaction de la pression,
**caractérisé en ce qu'**il comporte un module d'estimation (M) de rapport de mélange comportant un modèle délivrant audit module de régulation des valeurs de rapport de mélange estimées à partir d'au moins l'un des deux signaux de commande de vannes de contrôle et/ou de la pression mesurée.

8. Système comportant un moteur de fusée et un dispositif selon la revendication 7.

## Patentansprüche

1. Verfahren zur Steuerung des Drucks (PGC) und eines Mischungsverhältnisses eines Raketentriebwerks auf Grundlage eines Drucksollwerts (PGCc) und eines Sollwerts (RMc) des Mischungsverhältnisses, das eine Regelung umfasst, die Befehlssignale von zwei Steuerventilen (VR1, VR2) des Triebwerks liefert, wobei die Regelung eine Rückkopplungsschleife des Drucks verwendet,
**dadurch gekennzeichnet, dass** es ferner eine Bestimmung eines geschätzten Werts (RMe) des Mischungsverhältnisses umfasst, der von der Regelung verwendet wird, wobei der geschätzte Wert des Mischungsverhältnisses durch ein Modell (M) erhalten wird, das Werte des Mischungsverhältnisses liefert, die auf Grundlage von mindestens einem der zwei Befehlssignale der Steuerventile und/oder des gemessenen Drucks geschätzt werden.

2. Verfahren nach Anspruch 1, wobei das mindestens eine der zwei Befehlssignale des Steuerventils ein Befehlssignal (VR2) ist, das eine höhere Betriebsempfindlichkeit in Bezug auf das Mischungsverhältnis aufweist als das andere Ventilbefehlssignal.

3. Verfahren nach einem der Ansprüche 1 bis 2, das eine vorhergehende dynamische Behandlung (FT1, FT2) von mindestens einem der zwei Befehlssignale der Steuerventile und des gemessenen Drucks vor ihrer Lieferung an das Modell und eine dynamische Behandlung (FT3) des geschätzten Werts des Mischungsverhältnisses umfasst, der durch das Modell erhalten wird.

4. Verfahren nach einem der Ansprüche 1 bis 3, wobei das Modell (M) ein künstliches neuronales Netzwerk umfasst.

5. Verfahren nach einem der Ansprüche 1 bis 4, wobei eine Verschiebung (Offset1, Offset2) auf das mindestens eine der zwei Befehlssignale der Steuerventile und auf den gemessenen Druck (PGC) vor ihrer Lieferung an das Modell angewendet wird.

6. Verfahren nach den Ansprüchen 4 und 5, das einen vorhergehenden Lernprozess (E1) des künstlichen neuronalen Netzwerks, einen Probelauf (E2) des Raketentriebwerks und eine Neueinstellung (E3) des künstlichen neuronalen Netzwerks umfasst, um daraus die Verschiebungen abzuleiten.

7. Vorrichtung zur Steuerung des Drucks und eines Mischungsverhältnisses eines Raketentriebwerks, wobei die Vorrichtung einen Eingang, um einen Drucksollwert (PGCc) zu empfangen, einen Eingang, um einen Sollwert (RMc) des Mischungsverhältnisses zu empfangen, ein Modul zur Regelung des Drucks umfasst, das Befehlssignale von zwei Steuerventilen des Triebwerks liefert, wobei das Regelmodul eine Rückkopplungsschleife des Drucks verwendet,
**dadurch gekennzeichnet, dass** sie ein Modul (M) zur Schätzung des Mischungsverhältnisses umfasst, umfassend ein Modell, das dem Regelmodul Werte des Mischungsverhältnisses liefert, die auf Grundlage von mindestens einem der zwei Befehlssignale der Steuerventile und/oder des gemessenen Drucks geschätzt werden.

8. System, das ein Raketentriebwerk und eine Vorrichtung nach Anspruch 7 umfasst.

## Claims

1. A method of controlling the pressure (PGC) and a mixture ratio of a rocket engine from a pressure setpoint (PGCc) and from a mixture ratio setpoint (RMc), the method comprising regulation delivering control signals for two control valves (VR1, VR2) of said engine, the regulation making use of a pressure feedback loop, the method being **characterized in that** it further comprises determining an estimated value for the mixture ratio (RMe) used by said regulation, the estimated value for the mixture ratio being obtained by a model (M) that delivers mixture ratio values as estimated from at least one of the two control valve control signals and/or from the measured pressure.

2. A method according to claim 1, wherein said at least one of the control valve control signals is a control signal (VR2) having greater operating sensitivity on the mixture ratio than the other control valve signal.

3. A method according to claim 1 or claim 2, including prior dynamic processing (FT1, FT2) of at least one of the two control valve control signals and of the measured pressure before delivering them to the model, and dynamic processing (FT3) of the estimated mixture ratio value as obtained by the model.

4. A method according to any one of claims 1 to 3, wherein said model (M) comprises an artificial neural network.

5. A method according to any one of claims 1 to 4, wherein an offset (offset1, offset2) is applied to said at least one of the two control valve control signals and to said measured pressure (PGC) prior to supplying them to said model.

6. A method according to claims 4 and 5, comprising prior training (E1) of said artificial neural network, testing (E3) said rocket engine, and resetting (E3) said artificial neural network in order to deduce said offsets therefrom.

7. A device for controlling the pressure and a mixture ratio of a rocket engine, the device having an input for receiving a pressure setpoint (PGCc), an input for receiving a mixture ratio setpoint (RMc), and a pressure regulator module delivering control signals for two control valves of said engine, the regulator module using a pressure feedback loop, the device being **characterized in that** it includes an estimator module (M) for estimating the mixture ratio and including a model delivering to said regulator module values for the mixture ratio that are estimated from at least one of the two control valve control signals and/or from the measured pressure.

8. A system including a rocket engine and a device according to claim 7.
